# FASCICULE DE BREVET EUROPEEN

(11) **EP 0 966 406 B1**
(45) Date de publication et mention de la délivrance du brevet: **16.05.2001**
(21) Numéro de dépôt: 99900510.1
(22) Date de dépôt: 08.01.1999
(51) Int. Cl.: C03B 5/225, C03B 5/235, C03B 5/20

(54) **PROCEDE ET DISPOSITIF DE FUSION ET D'AFFINAGE DE MATIERES VITRIFIABLES**
VERFAHREN UND VORRICHTUNG ZUM SCHMELZEN UND LÄUTERN VON GLASARTIGEM MATERIAL
METHOD AND DEVICE FOR MELTING AND REFINING MATERIALS CAPABLE OF BEING VITRIFIED

(30) Priorité: 09.01.1998 FR 9800176; 09.03.1998 FR 9802849
(43) Date de publication de la demande: 29.12.1999
(73) Titulaire: SAINT-GOBAIN GLASS FRANCE, 92400 Courbevoie (FR)
(72) Inventeur: JEANVOINE, Pierre, F-78300 Poissy (FR); MASSART, Tanguy, F-40380 Poyanne (FR); BERTHEREAU, Anne, F-75011 Paris (FR)
(74) Mandataire: Renous Chan, Véronique
(86) Numéro de dépôt international: FR9900027
(87) Numéro de publication internationale: WO9935099

(56) Documents cités:
- EP-A- 0 775 671
- DD-A- 160 186
- US-A- 3 260 587
- US-A- 3 519 412
- US-A- 3 764 287
- US-A- 4 919 697

## Description

L'invention concerne un procédé de fusion et d'affinage de matières vitrifiables en vue d'alimenter en verre fondu en continu des installations de formage du verre.

Sont plus particulièrement visées les installations de formage de verre plat comme les installations float ou de laminage, mais aussi les installations de formage de verre creux du type bouteille, flacon, de fibres de verre du type laine minérale d'isolation thermique ou phonique ou encore de fils de verre textile dits de renforcement.

Beaucoup de travaux de recherche ont porté sur ces procédés comportant schématiquement une première étape de fusion, suivie d'un affinage destiné à conditionner thermiquement et chimiquement le verre fondu, à en supprimer les infondus, les bulles, toute cause de défauts apparaissant après formage.

Dans le domaine de la fusion, on a ainsi cherché, par exemple, à accélérer la fusion, ou à en améliorer le rendement énergétique. On peut ainsi citer le procédé consistant à échauffer rapidement, de manière homogène et contrôlée les matières vitrifiables, en opérant un intense brassage mécanique permettant de mettre intimement en contact les matières vitrifiables encore solides avec la phase déjà liquide. Ce procédé est notamment détaillé dans les brevets FR-2 423 452, FR-2 281 902, FR-2 340 911, FR-2 551 746, et utilise généralement des moyens de chauffage électriques du type électrodes immergées.

Un autre type de procédé de fusion a été développé, par exemple du type de ceux décrits dans les brevets US-3 627 504, US-3 260 587 ou US-4 539 034, consistant à utiliser comme moyens de chauffage des brûleurs immergés, c'est-à-dire des brûleurs alimentés en gaz et en air, généralement disposés de manière à affleurer au niveau de la sole de façon à ce que la flamme se développe au sein même de la masse des matières vitrifiables en cours de liquéfaction. Un procédé de fusion est décrit dans le brevet DD-A-160186 consistant à utiliser comme moyens de chauffage additionel des brûleurs immergés pour accélerer la fusion et/ou l'affinage.

Dans un cas comme dans l'autre, si l'on parvient effectivement à diminuer très significativement le temps de séjour des matières vitrifiables dans la chambre de fusion, à augmenter considérablement le rendement de production par rapport à des fusions « classiques », en revanche, le verre en fusion se présente sous forme d'une mousse qu'il est délicat d'affiner : il est notamment difficile de garantir la même qualité au verre final, notamment optique.

Des recherches ont également été faites dans le domaine de l'affinage. Ainsi, il est par exemple connu du brevet EP-775 671 et du brevet US-4 919 697 d'opérer au moins une partie de l'affinage sous pression réduite, ce qui a permis par exemple l'obtention de verres très pauvres en sulfates, à fort rédox. Cependant, un tel affinage provoque un moussage intense, qui peut être délicat à contrôler et éliminer.

L'invention a alors pour but l'amélioration de procédés de fusion et d'affinage, visant notamment à utiliser des installations plus compactes et/ou à être plus souples de fonctionnement, et/ou de plus grand rendement de production, etc..., sans que ces avantages industriels soient obtenus au détriment de la qualité du verre produit.

L'invention a tout d'abord pour objet un procédé de fusion et d'affinage de matières vitrifiables qui se caractérise par la combinaison de deux caractéristiques:
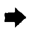 d'une part, tout ou partie de l'énergie thermique nécessaire à la fusion des matières vitrifiables est apportée par la combustion de combustible(s) du type fossile avec au moins un gaz comburant, lesdits combustibles/gaz ou les produits gazeux issus de la combustion étant injectés sous le niveau de la masse des matières vitrifiables,
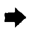 d'autre part, l'affinage des matières vitrifiables après fusion comprend au moins une étape de mise à une pression sous-atmosphérique.

Il s'est avéré qu'il y avait en fait une synergie extrêmement avantageuse sur le plan industriel entre l'utilisation d'une fusion appelée ci-après « par brûleurs immergés » pour plus de simplicité et celle d'un affinage à pression réduite.

Cependant, cette combinaison était loin de s'imposer comme une évidence, et on aurait pu s'attendre à ce que tous ces avantages détaillés ci-après ne s'obtiennent qu'au prix d'une qualité de verre médiocre, ce qui n'a pas été le cas. En effet, si le principe d'un affinage à pression réduite était connu dans sa généralité, il restait délicat à utiliser, et on n'était pas sûr d'obtenir le même taux résiduel en bulles/infondus tolérable qu'avec un affinage classique. Or dans l'invention, on utilise cet affinage très particulier en changeant un paramètre de taille, à savoir qu'au lieu d'alimenter la zone d'affinage en verre fondu « classique » à affiner, on l'alimente ici en fait en un verre obtenu par fusion par brûleurs immergés, c'est-à-dire en verre aux caractéristiques tout à fait particulières en ce sens qu'il est globalement mousseux, avec une densité relativement faible par rapport à celle d'un verre standard. Rien ne laissait supposer que l'on pourrait affiner à pression réduite un verre relativement mousseux au départ.

Or de manière surprenante, cela s'est avéré possible car on a découvert que ce verre mousseux issu d'une fusion par brûleurs immergés présentait également la caractéristique de ne contenir qu'extrêmement peu de sulfates, que l'on en ait ou non au départ. On a en effet généralement moins de 600 et même moins de 200 ou moins de 100 ppm, voire moins de 50 ppm de sulfate exprimé en poids en SO₃ dans le verre sortant de la chambre de fusion, et cela sans avoir à contrôler, réduire le taux de sulfate contenu habituellement dans les matières premières utilisées, de manière involontaire, voire même en ajoutant volontairement des sulfates aux matières vitrifiables. Et c'est ce faible taux de sulfate qui permet d'affiner efficacement sous pression réduite sans problème. Dans le cas contraire, une teneur importante ou simplement « standard » en sulfate dans le verre à affiner aurait provoqué lors de l'affinage à pression réduite une très forte expansion de la mousse par désulfatation, expansion qui aurait été tout à fait délicate à contrôler, à maîtriser. Cette quasi absence de sulfate dans le verre en sortie de chambre de fusion peut notamment s'expliquer par la pression partielle d'eau générée par la combustion par brûleurs immergés au sein des matières vitrifiables. A noter qu'un verre désulfaté donne moins de problème de composés volatils dans le bain float, moins de risque de formation de sulfure d'étain et donc en final moins de risque de défaut d'étain sur la feuille de verre. Cela diminue la quantité de sulfures (voire la supprime totalement) dans le cas de verres réduits, notamment des sulfures de fer donnant des couleurs résiduelles jaunes/ambres peu souhaitées ou des inclusions de sulfure de nickel, qui peuvent provoquer la casse du verre lors de traitements thermiques du type trempe.

A noter également une autre caractéristique très avantageuse du verre en sortie de chambre de fusion selon l'invention : s'il est effectivement sous forme d'une sorte de mousse qu'il reste à affiner, on peut contrôler la taille des bulles qu'il contient, et notamment dans certains cas supprimer quasiment toutes les bulles les plus petites, c'est-à-dire de diamètre d'environ moins de 200 µm, en effectuant sur ce verre lors de sa fusion une sorte de « micro-affinage » préalable au véritable affinage suivant la fusion, micro-affinage facilitant la coalescence des bulles, la disparition des plus petites bulles au profit des plus grosses et favorisé par l'ajout dans les matières vitrifiables d'agents d'aide à l'affinage du type coke ou sulfates. En outre, ce verre en sortie de chambre de fusion a généralement un taux résiduel d'infondus particulièrement faible, ce qui là encore, tout comme la taille des bulles, facilite l'opération d'affinage suivant la fusion.

L'invention permet donc d'avoir des verres très pauvres en sulfate avant même l'opération d'affinage, donc des verres au moins aussi pauvres, voire encore appauvris en sulfate après affinage, et ceci sans avoir à purifier/sélectionner des matières vitrifiables pour qu'elles aient peu de sulfate. Au contraire, on peut même ajouter du sulfate au départ, ce qui est tout à fait étonnant et avantageux.

Un effet avantageux obtenu par la combinaison selon l'invention, concerne le coût énergétique du procédé : la fusion par brûleurs immergés permet de ne pas avoir recours à la fusion électrique du type électrodes immergés, dont le coût peut être très significatif suivant les pays. En outre, et c'est le point le plus important, la fusion par brûleurs immergés crée un brassage convectif au sein des matières vitrifiables en cours de liquéfaction, comme détaillé par la suite. Ce mélange très fort entre matières non encore liquéfiées et celles qui sont déjà en fusion est extrêmement efficace, et permet d'obtenir une fusion, à matières vitrifiables de composition chimique identique, à température moins élevée et/ou beaucoup plus rapide qu'avec des moyens de chauffage traditionnels. Et un affinage sous pression réduite permet également d'affiner le verre à température moins élevée, et de manière beaucoup plus rapide. En effet, en abaissant la pression lors de l'affinage, on provoque une augmentation du volume molaire des gaz contenus dans les matières vitrifiables en fusion, d'où une augmentation de volume des bulles qu'elles contiennent et en conséquence une augmentation de leurs vitesses d'ascension vers la surface du bain et leur évacuation.

En affinant à pression réduite, on peut « se permettre » de travailler à température plus basse que dans des affinages classiques, justement dans les températures moins élevées utilisées avec la technique de fusion par brûleurs immergés.

Les températures rencontrées à la fois dans la fusion et l'affinage selon l'invention sont donc tout à fait compatibles et adaptées les unes aux autres, et globalement moins élevées que dans des procédés usuels, ce qui est très intéressant économiquement, simplement en terme de coût énergétique, mais également par le choix des matériaux du type réfractaires entrant dans la fabrication des installations : moins chauds, ils se corrodent moins vite.

Les temps de séjour dans la zone de fusion et dans celle de l'affinage sont également très significativement réduits et compatibles, ce qui est évidemment très positif sur le rendement de production, sur la tirée de l'installation dans son ensemble. Parallèlement, l'invention permet d'obtenir des installations très compactes : en effet, la fusion par brûleurs immergés, toujours grâce au brassage très fort qu'elle provoque, permet de réduire considérablement la taille de la chambre de fusion. Et l'affinage sous pression réduite a les mêmes conséquences sur la taille du ou des compartiments où s'effectue cette opération : globalement, l'installation peut donc être très compacte, avec des gains clairs en termes de coût de construction, de simplification de fonctionnement, de réduction de l'usure des matériaux de construction, ...

En ce qui concerne l'opération de fusion, le comburant choisi peut être selon l'invention à base d'air, d'air enrichi en oxygène ou même substantiellement à base d'oxygène. Une forte concentration en oxygène dans le comburant est en effet avantageux pour différentes raisons : on diminue ainsi le volume des fumées de combustion, ce qui est favorable sur le plan énergétique et ce qui évite tout risque d'une fluidisation excessive des matières vitrifiables pouvant provoquer des projections sur les superstructures, voûtes de la chambre de fusion. En outre, « les flammes » obtenues sont plus courtes, plus émissives. ce qui permet un transfert plus rapide de leur énergie vers les matières vitrifiables, et accessoirement de diminuer si on le souhaite la profondeur du « bain » de matières vitrifiables en cours de liquéfaction. On parle ici de « flammes », mais ce ne sont pas forcément des flammes au sens habituel du terme. On peut parler plus généralement, comme dans la suite du texte, de « combustions ». En outre, toute éventuelle émission de gaz NOₓ polluant est ainsi réduite au minimum.

En ce qui concerne le choix du combustible, celui-ci peut être du type combustible fossile gazeux ou non tel que du gaz naturel, le propane, du fioul ou tout autre combustible hydrocarboné. Il peut aussi s'agir d'hydrogène. Le procédé de fusion par brûleurs immergés selon l'invention est alors un moyen avantageux d'utiliser de l'hydrogène, par ailleurs difficilement utilisable avec des brûleurs « aériens », non immergés, étant donné le caractère peu émissif des flammes obtenues par la combustion entre H₂ et O₂.

Combiner dans une fusion par brûleurs immergés l'utilisation d'un comburant oxygène et celle d'un combustible hydrogène est un bon moyen d'assurer un transfert thermique efficace de l'énergie des brûleurs au verre en fusion, conduisant par ailleurs à un procédé totalement « propre », c'est-à-dire sans émission d'oxyde d'azote NOₓ, ni de gaz à effet de serre du type COₓ autre que celui pouvant provenir de la décarbonation des matières premières.

Avantageusement, la fusion s'effectue selon l'invention dans au moins une chambre de fusion que l'on équipe de brûleurs disposés de façon à ce que leur combustion ou gaz de combustion se développent dans la masse des matières vitrifiables en cours de fusion. On peut ainsi les faire traverser ses parois latérales, la sole et/ou les suspendre par le dessus, en les accrochant à la voûte ou à toute superstructure appropriée. Ces brûleurs peuvent être tels que leurs conduits d'amenée des gaz affleurent la paroi qu'ils traversent. Il peut être préférable que ces conduits « entrent » au moins en partie dans la masse des matières vitrifiables, de manière à éviter que les flammes ne soient à trop grande proximité des parois et n'entraînent des usures prématurées des matériaux réfractaires. On peut aussi choisir de n'injecter que les gaz de combustion, les combustions étant réalisées hors de la chambre de fusion à proprement dite.

Comme évoqué plus haut, il s'est avéré que ce mode de chauffage provoquait par convection un brassage intense des matières vitrifiables : des boucles de convection se forment ainsi de part et d'autre des combustions ou « flammes» ou courants de gaz de combustion, mêlant en permanence matières fondues et non encore fondues de manière très efficace. On retrouve ainsi les caractéristiques très favorables d'une fusion « agitée », sans avoir recours à des moyens d'agitation mécaniques peu fiables et/ou susceptibles d'usure rapide.

De préférence, on règle la hauteur de la masse des matières vitrifiables dans la chambre de fusion ainsi que celle sur laquelle se développent les combustions ou gaz issus de la combustion pour que ces combustions/gaz restent dans la masse desdites matières vitrifiables : le but est de laisser s'établir ainsi les boucles de circulation convective dans la matière en cours de liquéfaction.

De manière générale, ce type de fusion permet de réduire considérablement l'émission de tout type de poussières au niveau de la chambre de fusion, et de gaz type NOₓ car les échanges thermiques se font très vite, évitant les pics de températures susceptibles de favoriser la formation de ces gaz. Il réduit également considérablement l'émission des gaz de type COₓ.

On peut optionnellement prévoir de faire précéder la fusion par une étape de préchauffage des matières vitrifiables, à une température cependant nettement inférieure à celle nécessaire pour les liquéfier, par exemple à au plus 900°C. Pour réaliser ce préchauffage, on peut avantageusement récupérer l'énergie thermique des fumées. En les épuisant ainsi thermiquement, on peut globalement diminuer la consommation énergétique spécifique de l'installation.

Les matières vitrifiables peuvent comprendre des matières premières, mais aussi du calcin, voire des déchets destinés à être vitrifiés. Elles peuvent comprendre également des éléments combustibles (organiques) : on peut ainsi recycler, par exemple, des fibres minérales ensimées, avec liant (du type de celles utilisées dans l'isolation thermique ou acoustique ou de celles utilisées dans le renforcement de matière plastique), des vitrages feuilletés avec des feuilles de polymère du type polyvinylbutyral tels que des parebrises, ou tout type de matériau « composite » associant du verre et des matériaux plastiques tels que certaines bouteilles. On peut aussi recycler des « composites verre-métal ou composés métalliques » tels que vitrages fonctionnalisés avec des revêtements contenant des métaux, jusque-là difficiles à recycler car cela risquait d'entraîner un enrichissement progressif de la chambre de fusion en métaux s'accumulant à la surface de la sole. Mais le brassage imposé par la fusion selon l'invention permet d'éviter cette sédimentation, et ainsi de recycler, par exemple, des vitrages revêtus de couches d'émail, de couches de métal et/ou de différents éléments de connectique.

L'invention a aussi pour objet le recyclage de tous ces éléments composites contenant du verre grâce à la fusion par brûleurs immergés dans un four verrier. On peut notamment prévoir des fours à brûleurs immergés dont la fonction essentielle est la fabrication d'un calcin à partir de ces matériaux divers à recycler, calcin particulier pouvant ensuite servir comme matières premières associé ou non à du calcin standard, pour des fours verriers traditionnels.

Avantageusement, on peut prévoir d'introduire tout ou partie des matières vitrifiables dans la chambre de fusion sous le niveau de la masse des matières vitrifiables en cours de fusion. On peut introduire une partie de ces matières de façon habituelle au-dessus de la masse en cours de liquéfaction, et le reste en dessous, par exemple par des moyens d'amenée du type vis sans fin. On peut ainsi introduire les matières directement dans la masse en cours de liquéfaction, en un seul point ou en différents points répartis dans les parois de la chambre de fusion. Une telle introduction directement dans la masse de matières en cours de liquéfaction (ci-après désignée par « bain de verre ») est avantageuse à plus d'un titre: d'abord, elle diminue considérablement tous les risques d'envol des matières premières au-dessus du bain de verre, donc réduit au minimum le taux de poussières solides émises par le four. Ensuite, elle permet de mieux contrôler le temps de séjour minimal desdites matières avant extraction vers la zone d'affinage, et de les introduire sélectivement là où le brassage convectif est le plus fort, selon la disposition des brûleurs immergés. Ce ou ces points d'introduction dans le bain de verre peut (peuvent) ainsi se trouver à proximité de la surface, ou plus profondément dans le bain de verre, par exemple à une hauteur de bain de verre comprise entre 1/5^{ème} et 4/5^{ème} de la profondeur totale du bain de verre à partir du niveau de la sole, ou encore entre 1/3 et 2/3 de ladite profondeur.

On a vu que le procédé selon l'invention permettait de recycler des matériaux plastiques, sous forme de produits composites associés avec du verre tout particulièrement, ces plastiques servant ainsi pour partie de combustible. Il est également possible, et avantageux, d'introduire tout ou partie du combustible nécessaire à la fusion par brûleurs immergés sous forme de combustible solide (matériaux organiques de type polymère, charbon) ou même de combustible liquide, ce combustible venant se substituer en partie au moins aux combustibles (notamment fossiles) liquides ou gazeux alimentant les brûleurs. De manière générale, le terme de « matières vitrifiables » ou « matières premières » utilisé dans le présent texte vise à englober les matières nécessaires à l'obtention d'une matrice vitreuse (ou céramique ou vitrocéramique), mais également tous les additifs (additifs d'affinage ...), tous les combustibles liquides ou solides éventuels (plastique de matériau composite ou non, matières organiques, charbon, ...), et tout type de calcin.

Le procédé selon l'invention peut fonctionner avec un taux de calcin élevé.

Comme mentionné plus haut, l'affinage selon l'invention est donc opéré sur des matières vitrifiables en fusion du type verre à l'état mousseux. Typiquement, cette mousse a une densité d'environ 1 à 2 par exemple, c'est-à-dire une masse volumique 1 à 2 g/cm³ (à comparer à une densité de l'ordre de 2,4 pour du verre non mousseux), de préférence un taux de sulfate d'au plus 600 ou même d'au plus 100 ppm exprimé en poids de SO₃ et une majorité de bulles de diamètre d'au moins 200 µm. Elle peut ainsi avoir une masse volumique comprise entre 0,5 et 2 g/cm³, notamment 1 à 2 g/cm³.

Pour améliorer les performances de l'affinage, on ajoute de préférence aux matières vitrifiables des additifs d'aide à l'affinage divers, le but était notamment de faire disparaître du verre les bulles de diamètre inférieur à 200 µm dès le stade de la fusion, comme évoqué plus haut. Il peut s'agir d'additifs réducteurs, tel que le coke (qui permet aussi d'ajuster le rédox du verre). Dans ce cas, il est avantageux de sélectionner de la poudre de coke de granulométrie moyenne inférieure à 200 µm. Il peut aussi s'agir de sulfates. L'affinage sous pression réduite provoque une croissance des bulles, le but étant que cette croissance se fasse rapidement, et que l'on puisse évacuer, faire éclater les bulles en surface du bain de verre facilement. D'autres additifs d'aide à l'affinage seront plutôt efficaces lors du stade d'affinage à proprement parlé, après celui de la fusion. Ils permettent notamment de « déstabiliser » la mousse : il s'agit par exemple de fluor ou composé fluoré ou chloré, plus généralement d'halogénures, ou encore de nitrate du type NaNO₃ : le fluor (halogène) paraît abaisser la viscosité du verre, il permettrait ainsi de faciliter le drainage des films qui se forment entre les bulles, drainage favorisant l'effondrement de la mousse. Il abaisse aussi la tension de surface du verre.

Un autre facteur influençant la façon dont s'opère la croissance des bulles lors de l'affinage sous pression réduite est la nature des gaz au-dessus de la matière en fusion. On peut bien sûr choisir simplement une pression partielle d'air. On peut aussi choisir d'enrichir l'atmosphère en gaz inerte du type azote, voire de ne choisir une pression partielle qu'en gaz inerte du type azote. On s'est en effet aperçu que choisir une pression résiduelle en gaz inerte du type azote était favorable à l'éclatement des bulles en surface lors de l'affinage. En fait, c'est la trop forte concentration en gaz oxydant type O₂ qui paraît défavorablement tendre à freiner cet éclatement.

Avantageusement, la pression sous-atmosphérique dans laquelle s'effectue au moins une partie de l'affinage est inférieure ou égale à 0,5 atmosphère (0,5.10⁵ Pa), notamment de l'ordre de 0,3 à 0,01 atmosphère (environ 3.10⁴ à 0,1.10³ Pa).

Avantageusement, le procédé selon l'invention permet d'opérer la fusion et/ou l'affinage à des températures n'excédant pas 1400°C, notamment d'au plus 1380 ou 1350°C.

L'affinage selon l'invention, selon une première variante, peut être fait dans au moins un compartiment statique (immobile en fonctionnement) en aval de la chambre de fusion et dont au moins une zone est mise sous pression réduite.

Selon une seconde variante, l'affinage est opéré toujours en aval de la chambre de fusion, mais dans un compartiment susceptible d'être mis en rotation afin d'assurer l'affinage par centrifugation, avec au moins une zone dudit compartiment notamment la plus amont, mise sous pression réduite.

Une troisième variante consiste à combiner les deux précédentes, notamment en utilisant pour l'affinage un premier compartiment statique avec une zone sous pression réduite, puis un second en rotation comprenant également une zone sous pression réduite, de préférence plus réduite que dans le compartiment statique.

Selon un mode de réalisation, le procédé selon l'invention prévoit de traiter le flux des matières vitrifiables en fusion, entre la phase de fusion et la phase d'affinage ou en début de la phase d'affinage, par au moins un moyen diviseur de jet. Ce moyen, par exemple un élément percé d'orifices par lequel on contraint le flux de verre en fusion à passer, permet de diviser ce flux en un grand nombre de filets de petit diamètre. La taille des orifices est avantageusement choisie de façon à être voisine de la taille des bulles que l'on cherche à éliminer. Ainsi, si l'on dispose le moyen diviseur de jet juste en aval de la zone à pression sous atmosphérique du compartiment d'affinage, l'action de la pression réduite va s'exercer très rapidement sur les filets générés par le moyen diviseur de jet, et permettre un affinage rapide, même avec des débits de verre importants. L'alimentation en verre à affiner du compartiment d'affinage peut ainsi devenir en quelque sorte analogue à celle obtenue par une filière qui déboucherait dans une enceinte à pression réduite.

(Dans le cadre de l'invention, les termes « amont » et « aval » se réfèrent à la direction de l'écoulement du verre dans l'installation depuis l'enfournement des matières vitrifiables dans la chambre de fusion jusqu'à l'extraction du verre affiné).

Le procédé de fusion/d'affinage selon l'invention permet de fabriquer des verres de compositions et de propriétés très variées. Du fait de sa faible inertie, il permet d'ailleurs de passer d'une composition à une autre avec des temps de transition très courts.

Il permet ainsi de fabriquer des verres relativement réduits, présentant notamment un rédox supérieur ou égal à 0,3. (On définit le rédox comme le rapport de la teneur en pourcentage en poids de fer ferreux FeO sur la teneur en fer total pondéral de la composition exprimée sous forme de Fe₂O₃).

Il permet également de fabriquer des verres à taux de SiO₂ élevé, par exemple d'au moins 72 ou même au moins 75% en poids, verres généralement difficiles à fondre, mais intéressants, notamment en termes de coût de matières premières, du fait qu'ils sont de faible densité, et qu'ils présentent une très bonne compatibilité avec des matériaux plastiques. Il permet aussi de fabriquer des verres assez particuliers, à fort taux d'oxyde d'alcalino-terreux, par exemple contenant au moins 18% en poids de CaO, pourtant assez corrosifs avec les procédés de fusion traditionnels à plus haute température que dans l'invention, ainsi que des verres à faible taux d'oxyde de sodium, d'au plus 11% en poids par exemple, ou à très faible taux de sulfates, d'au plus 100 ppm par exemple. Des verres contenant du fer, de rédox élevé mais à teneur en sulfate faible permettent également l'obtention de verres à couleur résiduelle dans les bleus, particulièrement esthétique et recherchée dans le domaine du verre plat pour l'automobile et pour le bâtiment par exemple. On peut ainsi obtenir des verres anti-solaires très sélectifs, sur lesquels on peut déposer des couches anti-solaires pour en renforcer les performances thermiques, du type TiN par exemple, couches décrites notamment dans les brevets EP-638 527 et EP-511 901.

L'invention a également pour objet un dispositif de fusion et d'affinage, notamment adapté pour la mise en oeuvre du procédé décrit plus haut, et qui comporte
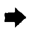 au moins une chambre de fusion équipée de brûleurs alimentés en combustibles fossile(s) du type gaz (naturel) et en comburant(s) du type air ou oxygène, lesdits brûleurs étant disposés de façon à injecter ces gaz ou les gaz issus de la combustion sous le niveau de la masse des matières vitrifiables introduite dans ladite chambre de fusion,
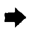 au moins un compartiment d'affinage en aval de la chambre de fusion et comprenant au moins une zone susceptible d'être mise à pression sous-atmosphérique.

Avantageusement, comme évoqué précédemment, la chambre de fusion peut être équipée d'au moins un moyen d'introduction de matières vitrifiables sous le niveau du bain de verre, notamment au moins deux et de préférence sous forme d'ouverture(s) dans les parois associée(s) à un moyen d'amenée du type vis sans fin. On minimise ainsi les risques d'envol de poussières, tout en prévoyant éventuellement aussi une introduction au-dessus du bain de verre pour les matières vitrifiables comme la silice sur lesquelles on peut opérer une opération de préchauffage sans risque de prise en masse.

Indépendamment de l'opération d'affinage aussi, l'invention a également porté sur des améliorations de conception concernant les parois de la chambre de fusion destinées à être en contact avec le bain de verre. Plusieurs variantes sont possibles. Dans certain cas, on peut utiliser simplement des matériaux réfractaires connus à base d'oxyde comme l'alumine, la zircone, l'oxyde de chrome, les réfractaires dits AZS (à base d'alumine, de zircone et de silice) On préfère généralement les associer à un système de refroidissement par circulation de fluide du type eau (« water-jacket » ou refroidissement par boîte à eau en français). On peut prévoir de disposer la boîte à eau côté extérieur, les réfractaires étant alors en contact direct avec le verre, ou côté intérieur. La boite à eau a alors pour fonction de créer une veine de verre plus froide à proximité de réfractaires, particulièrement sollicités dans ce contexte car le bain de verre généré par les brûleurs immergés provoque des courants convectifs forts contre les parois.

Une autre variante consiste à ne pas utiliser de réfractaires dans la zone du bain de verre, mais uniquement la boîte à eau évoquée plus haut.

Une autre variante consiste à utiliser des matériaux réfractaires, (éventuellement associés à un système de refroidissement du type boîte à eau) et à les doubler d'un garnissage en un métal hautement réfractaire tel que le molybdène (ou alliage de Mo). Ce garnissage peut avantageusement être maintenu à distance (par exemple 1 à quelques millimètres) des parois des réfractaires, et offrir au bain de verre une surface de contact continue (plaque(s) pleine(s) en Mo) ou non, (plaque(s) percée(s) d'orifices en Mo). Ce garnissage a pour but d'éviter mécaniquement une convection directe du verre sur les réfractaires, en générant une couche de verre « calme » le long des réfractaires voire en supprimant tout contact du verre avec ces derniers.

Dans la chambre de fusion, on a conçu de préférence tout ou partie des brûleurs immergés de façon à ce qu'ils puissent injecter dans le bain de verre un fluide en participant pas à la combustion en substitution (temporaire) au comburant et/ou au combustible. Ce fluide peut être un gaz inerte du type N₂ ou un fluide de refroidissement du type eau liquide se vaporisant immédiatement dans le bain de verre. Le fait d'arrêter ainsi la combustion temporairement tout en continuant à injecter un fluide au niveau du brûleur a généralement deux objectifs : soit on veut arrêter le fonctionnement du brûleur et plus généralement par exemple de la chambre de fusion dans son ensemble, l'injection de gaz inerte du type N₂ permettant de sécuriser la chambre au niveau des brûleurs, soit on veut changer le brûleur contre un autre alors que les autres brûleurs fonctionnent et qu'on est donc toujours en présence d'un bain de verre en fusion. Dans ce cas, comme détaillé par la suite, projeter de façon appropriée de l'eau via le brûleur permet de figer temporairement le verre au-dessus du brûleur en créant une sorte de « cloche », ce qui laisse un laps de temps suffisant pour procéder au changement sans enverrer le brûleur.

Comme évoqué plus haut, on peut prévoir de munir le dispositif selon l'invention d'au moins un moyen diviseur de jet entre la chambre de fusion et le compartiment d'affinage, notamment juste à l'entrée du compartiment d'affinage ou dans sa partie la plus amont. Il peut s'agir d'un élément percé d'orifices de taille appropriée.

Par ailleurs, il est à noter qu'utiliser un tel moyen diviseur de jet peut aussi être envisagé indépendamment du mode de fusion adapté : un tel moyen diviseur permet d'affiner plus vite, avec des débits de verre importants, quelle que soit la façon dont on a obtenu la fusion du verre, par exemple par des moyens conventionnels du type brûleurs aériens (non immergés) et/ou par fusion électrique par des électrodes immergées.

De même, il peut être intéressant de l'utiliser même si on opère l'affinage à pression atmosphérique.

Cependant, il est particulièrement intéressant de l'employer dans un contexte de fusion par brûleurs immergés qui tend à générer une mousse à très fort taux de bulles, et/ou dans un contexte d'affinage sous pression réduite, car il en augmente considérablement l'efficacité qui est déjà particulièrement élevée.

Selon une première variante évoquée plus haut, le compartiment d'affinage est statique et en élévation (c'est-à-dire d'une hauteur significativement plus importante que ses dimensions au sol). Ce compartiment comprend selon un premier mode de réalisation, une cloison interne sensiblement verticale qui délimite en combinaison avec les parois internes du compartiment au moins deux canaux. Il s'agit successivement d'un premier canal imposant aux matières vitrifiables en fusion un trajet ascendant puis d'un second canal imposant auxdites matières vitrifiables un trajet descendant, le premier canal étant de préférence celui qui est mis à pression sous-atmosphérique. On crée ainsi une sorte de siphon pour le verre à affiner. Ce compartiment est avantageusement équipé de moyens de réglage/régulation de la perte de charge des matières vitrifiables en fusion à l'entrée du compartiment d'affinage. De même, on prévoit d'ajuster la hauteur du compartiment d'affinage en fonction de différents critères, notamment en fonction du niveau de dépression choisi dans la zone sous pression réduite.

Selon un second mode de réalisation, le compartiment d'affinage statique utilisé dans le cadre de l'invention est en élévation, et comprend des moyens d'introduction des matières vitrifiables en fusion à affiner en partie supérieure, et des moyens d'évacuation des matières affinées en partie inférieure, lesdites matières suivant globalement un trajet principalement vertical descendant dans ledit compartiment. Sa conception peut par exemple s'inspirer des enseignements des brevets EP-231 518, EP-253 188, EP-257 238 et EP-297 405.

Selon une seconde variante, le compartiment d'affinage comporte au moins un appareil susceptible d'être mis en rotation pour assurer l'affinage par centrifugation, les parois internes dudit appareil délimitant sensiblement la forme d'un cylindre creux vertical au moins dans sa partie médiane. Avantageusement, l'appareil comporte une zone dite supérieure à pression sous-atmosphérique et une zone dite inférieure laissée à pression ambiante, et séparées l'une de l'autre par un ou plusieurs moyens mécaniques du type plaque métallique percée d'orifice(s).

Selon une conception préférée, l'appareil est alimenté en partie supérieure en matières vitrifiables en fusion pour un moyen d'amenée statique du type canal d'écoulement. Ces moyens d'amenée peuvent comprendre au moins un compartiment mis sous pression réduite pour permettre l'alimentation de l'appareil et/ou opérer un premier affinage.

II faut prévoir des moyens d'étanchéité assurant la jonction entre l'extrémité de ce canal/ces moyens d'amenée et l'appareil, moyens du type « joint dynamique » ou joint tournant, comme détaillé ultérieurement. L'appareil est avantageusement muni de moyens de piégeage de particules solides de densité supérieure à celle du verre, moyens notamment localisés dans sa zone inférieure et sous forme d'encoches/de rainures pratiquées dans ses parois internes. De préférence, on sélectionne la vitesse de rotation de l'appareil entre 100 et 1500 tours par minute.

L'appareil peut également être muni de moyens mécaniques fixes ou suivant sa rotation, et aptes à cisailler la mousse et à l'entraîner du haut vers le bas, vers la zone inférieure de l'appareil d'où le verre affiné est soutiré.

Ces moyens sont notamment sous forme de déflecteurs percés, d'ailettes, disposées dans la zone supérieure dudit appareil.

Ce type d'affinage centrifuge avec passage dans une zone à pression réduite est particulièrement efficace. En effet, la pression réduite va permettre d'assurer une croissance la plus forte possible des bulles avant l'affinage à proprement dit par centrifugation : les bulles s'éliminent d'autant plus vite dans l'appareil que leur diamètre est important. La pression réduite va également permettre de diminuer davantage la teneur en sulfate résiduelle du verre produit. A noter qu'un verre désulfaté (cette remarque vaut aussi pour la première variante où l'affinage se fait en statique), donne moins de problèmes de composés volatils dans le bain float, moins de risque de formation de sulfure d'étain et donc en final moins de risque de défaut d'étain sur la feuille de verre. Cela garantit aussi l'absence de sulfures dans le cas de verres réduits, notamment des sulfures de fer donnant des couleurs résiduelles jaunes/ambres peu souhaitées ou des inclusions de sulfure de nickel, qui peuvent provoquer la casse du verre lors de traitements thermiques du type trempe.

L'affinage centrifuge comportant une phase de pression réduite est particulièrement indiqué dans le cas de l'affinage du verre relativement mousseux.

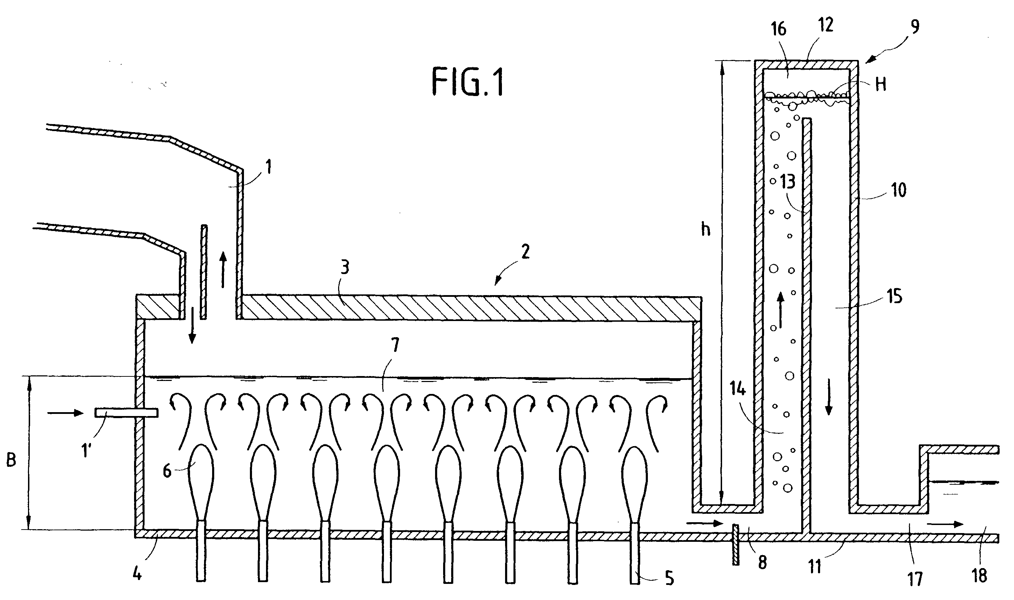

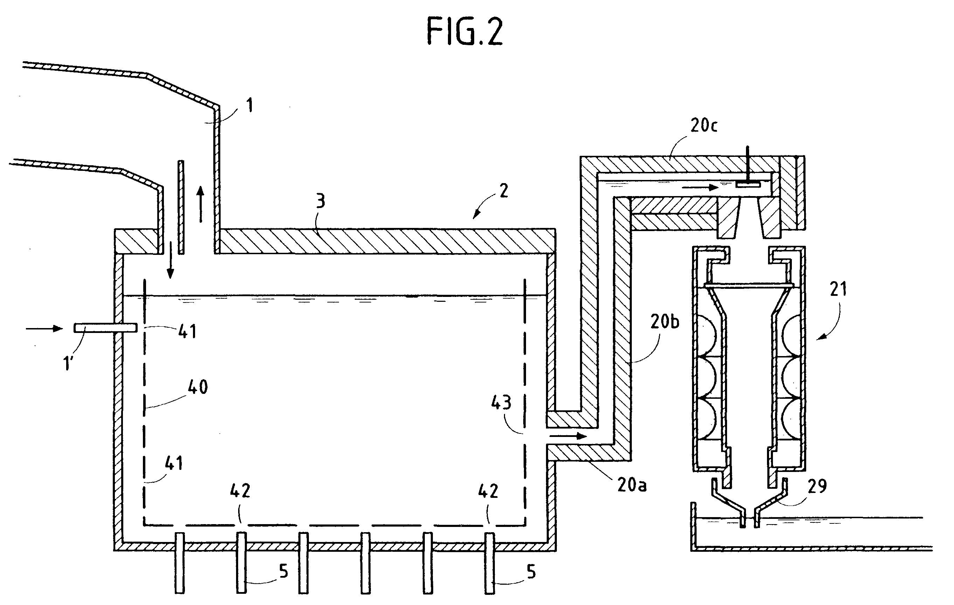

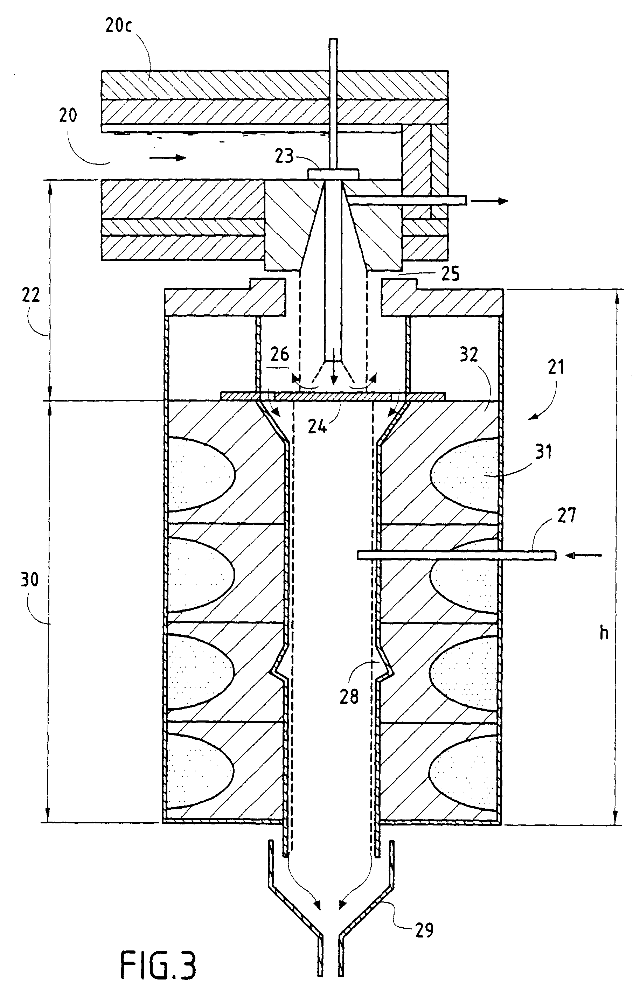

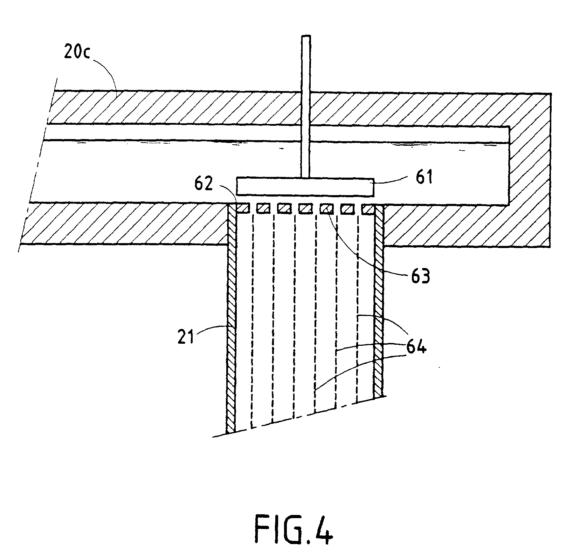

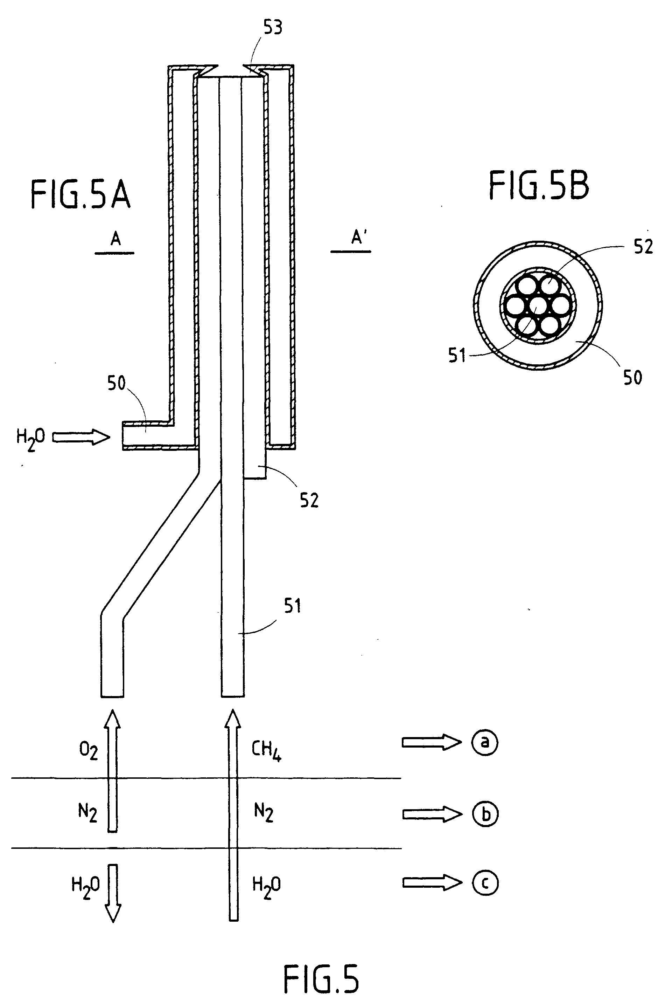

L'invention sera ci-après détaillée à l'aide de deux modes de réalisation non limitatifs, illustrés par les figures suivantes :
□ **figure 1 :** une installation schématique de fusion/affinage utilisant un dispositif d'affinage statique,
□ **figure 2 :** une installation schématique de fusion/affinage utilisant un dispositif d'affinage par centrifugation.
□ **figure 3 :** une vue agrandie d'un dispositif d'affinage de l'installation du type de celui représenté à la figure 2,
□ **figure 4 :** une vue agrandie schématique du diviseur de jet utilisé dans le dispositif de la figure 2,
□ **figure 5 :** une vue schématique en coupe transversale d'un brûleur immergé équipant la chambre de fusion des installations des figures 1 et 2.

Ces figures ne sont pas nécessairement à l'échelle et pour plus de clarté sont extrêmement simplifiées.

Les dispositifs décrits ci-après sont adaptés pour fondre et affiner dès verres de compositions très variées, ici des verres destinés à alimenter une installation float pour produire du verre plat. Mais cette application n'est pas limitative.

Outre, bien sûr, tous les verres standards du type silico-sodo-calcique, différents types de verres spéciaux sont particulièrement intéressants à fabriquer avec les dispositifs selon l'invention, notamment ceux jugés jusque-là difficiles à fondre :
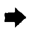 les verres à faible taux de Na₂O et relativement fort taux d'oxyde alcalino-terreux, notamment de CaO, avantageux sur le plan économique en termes de coût de matières premières, mais assez corrosifs aux températures de fusion conventionnelles et relativement durs à fondre par des procédés classiques. Il peut s'agir des compositions de verre par exemple décrites dans le brevet FR97/08261 du 1er juillet 1997, telles que (% pondéraux) :

| | |
|---|---|
| SiO₂ | 72-74,3% |
| Al₂O₃ | 0-1,6% |
| Na₂O | 11,1-13,3% |
| K₂O | 0-1,5% |
| CaO | 7,5-10% |
| MgO | 3,5-4,5% |
| Fe₂O₃ | 0,1-1% |

ou encore de compositions du type (exprimées en pourcentages pondéraux) :

| | |
|---|---|
| SiO₂ | 66-72, notamment 68-70% |
| Al₂O₃ | 0- 2% |
| Fe₂O₃ | 0-1% |
| CaO | 15-22% |
| MgO | 0-6, notamment 3-6% |
| Na₂O | 4-9, notamment 5-6% |
| K₂O | 0-2, notamment 0-1% |
| SO₃ | traces |

Un exemple illustrant cette famille de compositions est le suivant :

| | |
|---|---|
| SiO₂ | 69% |
| Al₂O₃ | 1% |
| Fe₂O₃ | 0,1% |
| CaO | 18,9% |
| MgO | 5% |
| Na₂O | 5,6% |
| K₂O | 0,3% |
| SO₃ | traces |

Ce verre présente une température inférieure de recuisson appelée également « strain point » de 590°C (température à laquelle le verre a une viscosité de 10^{14,5} poises). Il a aussi une température de liquidus de 1225°C, une température T(log2) de 1431°C et une température T(log3,5) de 1140°C [Tlog(2) et Tlog(3,5) correspondent aux températures que le verre a respectivement quand il atteint en poises une viscosité de log2 ou log3,5].
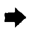 des verres à fort taux de silice, eux-aussi intéressants sur le plan économique, et avec une relativement faible densité dont le domaine de compositions, toujours exprimé en pourcentages pondéraux, est le suivant :

| | |
|---|---|
| SiO₂ | 72 à 80% |
| CaO + MgO + BaO | 0,3 à 14% |
| Na₂O | 11 à 17% |
| oxydes alcalins | 11 à 18,5% |
| Al₂O₃ | 0,2 à 2% |
| B₂O₃ | 0 à 2% |
| Fe₂O₃ | 0 à 3% |
| SO₃ | traces éventuellement |
| coke | 0 - 600 ppm |

et éventuellement des oxydes colorants oxyde de Ni, Cr, Co, ...)
(Ces verres ont la particularité d'être particulièrement visqueux).

Un exemple illustrant cette famille de compositions est le suivant :

| | |
|---|---|
| SiO₂ | 76,4% |
| Fe₂O₃ | 0,1% |
| Al₂O₃ | 0,1% |
| CaO | 7,6% |
| MgO | 5% |
| Na₂O | 10% |
| K₂O | 0,3% |

II a une densité d'environ 2,46 (à comparer aux densités de 2,52 du verre silico-sodo-calcique standard du type « Planilux » commercialisé par Saint-Gobain Vitrage).
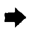 On a également vu plus haut que l'on pouvait obtenir avec le procédé selon l'invention des verres réduits, dont le fort rédox, la teneur en fer, et le très faible taux de sulfate permettent l'obtention de verres de couleur résiduelle bleue.
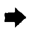 Avec le procédé selon l'invention, on peut aussi fabriquer des verres à taux nul ou quasiment nul en oxydes alcalins du type Na₂O, notamment en vue d'applications pour des vitrages anti-feu ou pour des substrats utilisés dans l'industrie électronique. On peut pour de telles compositions se reporter notamment aux brevets EP-526 272 et EP-576 362.

D'autres verres, notamment à faible taux de MgO du type de ceux décrits dans les brevets EP-688 741 et WO96/00194 peuvent également être fabriqués par le procédé de l'invention.

Un premier mode de réalisation est donc représenté à la figure 1 : un canal 1 permet à la fois d'introduire une partie des matières vitrifiables dans la chambre de fusion 2 par la voûte 3 et d'évacuer les fumées de combustion. Ces fumées vont préchauffer ces matières vitrifiables, on récupère ainsi leur énergie thermique. Les matières premières susceptibles d'être ainsi introduites au-dessus du bain 7 comportent notamment la silice, apte à se préchauffer sans prendre en masse. Le reste des matières premières est injecté en au moins un point 1' situé sous le niveau du bain de verre 7, notamment par une ouverture alimentée par une vis sans fin. On n'a représenté ici qu'un point d'injection, en outre disposé plutôt relativement en hauteur par rapport à la hauteur totale du bain de verre B, aux environs des 2/3 de cette hauteur et sur la paroi frontale de la chambre.

En fait, on peut prévoir plusieurs points d'injection dans les parois (parois frontales ou parois latérales) à cette même hauteur ou non, notamment soit dans la moitié supérieure, soit dans la moitié inférieure de cette hauteur B, par exemple entre le 1/3 et les 2/3 de cette hauteur. En fait, cette injection directement dans le bain de verre permet de diminuer fortement le taux d'envols (émissions de poussières solides) au-dessus du bain. En outre, selon sa configuration, elle permet de diriger les matières là où le brassage convectif est le plus fort et/ou d'en tenir compte pour que ces matières restent pendant au moins un laps de temps minimal dans la chambre 2 avant de passer dans la zone d'affinage.

La sole 4 de la chambre est équipée de rangées de brûleurs 5 qui la traversent et pénètrent dans la chambre de fusion sur une hauteur réduite. Les brûleurs 5 sont de préférence munis de moyens de refroidissement non représentés, du type boite à eau. Les brûleurs 5 en fonctionnement développent des combustions dans des zones 6, créant à leur proximité des courants de convection au sein de la matière vitrifiable en cours de liquéfaction. Ce brassage convectif crée une mousse qui va transférer l'énergie thermique dans l'ensemble du bain 7. La fusion s'effectue de préférence vers 1350°C, par exemple pour un verre standard de la famille des verres silico-sodo-calciques.

Les parois de la chambre 2 qui sont en contact avec le bain de verre 7 sont ici en matériaux réfractaires refroidis, côté extérieur, par un système de refroidissement du type boite à eau (non représenté). Une variante consiste à ce que ce système de refroidissement, aux parois métalliques, se trouve contre les réfractaires mais du côté intérieur et se trouve donc en contact avec le verre fondu. Ces deux variantes permettent de ralentir l'usure des réfractaires en refroidissant superficiellement le verre à proximité des parois de réfractaires.

Le fonctionnement des brûleurs 5 a été adapté à la fusion immergée de la façon très schématiquement représentée à la figure 5. La figure 5a représente une coupe longitudinale d'un brûleur 5 et la figure 5b une coupe transversale, au niveau du plan AA' indiqué à la figure 5a de celui-ci. Le brûleur est doublé d'un système de refroidissement 50 du type boite à eau et d'un conduit 51 central autour duquel sont disposés concentriquement une pluralité de conduits 52, tous ces conduits de section cylindrique venant déboucher dans le nez du brûleur 53.

En fonctionnement normal (fonctionnement [a]), le conduit 51 est alimenté en gaz combustible du type gaz naturel (ou autre gaz combustible ou fioul), et les conduits 52 sont alimentés en comburant, ici de l'oxygène par exemple), l'interaction CH₄/O₂ créant une combustion dans le bain de verre.

En fonctionnement de sécurité (fonction [b]), c'est-à-dire quand on veut stopper la combustion au niveau du brûleur sans risque de l'enverrer complètement, on injecte via le conduit 51 et/ou via les conduits 52 de l'azote.

En fonctionnement destiné à permettre l'échange du brûleur contre un autre (fonctionnement [c]), on injecte de l'eau par le conduit 51, eau qui se vaporise instantanément dans le brûleur même ou dès la sortie du brûleur, la vapeur créant une sorte de voûte de verre refroidi au-dessus du brûleur; on stoppe alors tout fonctionnement du brûleur et on a alors suffisamment de temps pour effectuer l'échange, avant que la « voûte » ne s'effondre. L'eau injectée est au moins partiellement recueillie dans le brûleur par les conduits 52. (on peut aussi inverser les rôles des conduits 51 et 52 dans ce mode de fonctionnement). On peut également substituer à l'eau tout autre fluide de refroidissement apte à figer ainsi le verre.

Le brûleur et ses différents modes de fonctionnement décrits plus haut sont un objet de l'invention, indépendamment de l'opération globale de fusion et d'affinage impliquée dans l'installation verrière.

Le verre mousseux fondu issu de la fusion par brûleurs immergés est ensuite soutiré en partie basse par un canal 8 muni d'un moyen de réglage de perte de charge du type poinçon non représenté. On contrôle ainsi la perte de charge du verre mousseux entrant dans le compartiment d'affinage statique 9. Ce compartiment comporte des parois latérales 10, une paroi de fond 11 au même niveau que la sole de la chambre de fusion, et une paroi supérieure 12 délimitant un volume intérieur sensiblement parallélépipédique. Est également prévue une cloison 13 fixée à la paroi du fond 11 mais laissant un passage en partie supérieure. Cet ensemble définit aussi un canal 14 imposant au verre un trajet ascendant, puis un canal 15 imposant au verre un trajet descendant. Dans la partie la plus haute 16, se forme un niveau de verre H.

Le verre affiné est ensuite soutiré par un canal 17 venant alimenter un compartiment 18 amenant le verre vers l'installation de formage de type float non représentée.

Dans le compartiment d'affinage, on met la zone du canal 14 sous pression réduite, par exemple 0,3 atmosphère. Le verre mousseux provenant du canal 8 va alors monter dans ce canal, les infondus résiduels éventuels étant progressivement « digérés » et les bulles croissant en taille au fur et à mesure qu'elles s'élèvent dans le canal. Le taux d'expansion de la mousse reste cependant très modéré, grâce au fait que la mousse issue de la chambre de fusion 3 possède un très faible taux de sulfate résiduel. En zone 16, les bulles viennent éclater à la surface H, la mousse disparaît rapidement, et le verre globalement affiné redescend alors le long du canal 15. Si nécessaire, on peut prévoir dans cette zone 16 des moyens auxiliaires de chauffage, du type brûleurs conventionnels ou résistances électriques accrochés à la paroi 12, et éventuellement des moyens mécaniques, non représentés, destinés à faciliter l'éclatement des bulles du type barrage.

Pour donner un ordre de grandeur, on peut prévoir que la hauteur h du compartiment d'affinage est de l'ordre de quelques mètres, par exemple 3 mètres pour la pression réduite de 0,3 atm. choisie.

Les figures 2 et 3 représentent le second mode de réalisation. La chambre de fusion 2, est globalement de même conception que celle représentée à la figure 1. La seule différence réside dans la façon dont on protège les parois de réfractaires de la chambre 2. Ici, on a immergé dans le bain de verre 7 une doublure en métal réfractaire constituée d'une paroi mince en molybdène 40 épousant la forme de la cavité de la chambre de fusion et maintenue à une distance de un à quelques millimètres des parois des réfractaires, au moyen de cales appropriées et/ou en étant suspendue dans le bain de verre par les parois de réfractaires situées au-dessus du bain ou par la voûte.

Cette plaque 40 est percée d'orifices, d'abord dans sa zone horizontale venant doubler la sole 4, afin de pouvoir être traversée par les brûleurs 5, ainsi que dans toutes ses autres parois, avec une répartition homogène dans les orifices : ce perçage n'empêche donc pas le contact réfractaires/verre fondu, par contre il casse mécaniquement les mouvements de convection du verre à proximité des réfractaires, et ralentit ainsi leur usure. Les orifices 41 des parois de la doublure 40, à l'exception de celles doublant la sole sont de préférence cylindriques et de dimensions variables, ceux de la paroi côté sole doivent au moins comprendre des orifices 42 d'une taille suffisante pour laisser passer les brûleurs 5. La doublure 40 doit aussi être largement percée (43) dans sa paroi doublant la paroi transversale aval de la chambre, pour que le verre puisse être évacué par le canal 20a. il en est de même pour la zone 1' d'introduction des matières premières : il y a nécessairement une complémentarité dans les ouvertures ménagées dans les parois en réfractaires et dans la doublure en molybdène.

Cette doublure en Mo (désignée sous le terme anglo-saxon de (« Mo lining ») est en elle-même une invention, particulièrement appropriée en association avec une chambre de fusion par brûleurs immergés, indépendamment de la façon dont peut s'opérer l'affinage ultérieur éventuel. (Il en est de même du refroidissement côté extérieur ou côté verre des réfractaires illustré à la figure précédente).

L'autre différence d'avec la figure 1 réside dans la façon dont le verre est soutiré de la chambre de fusion. Dans le cas de la figure 2, le verre est soutiré un peu plus « haut », avec un conduit d'amenée 20 se décomposant en une première partie horizontale 20(a), une seconde partie verticale 20(b) et une troisième partie horizontale 20(c) débouchant dans l'appareil du centrifugeur 21. Pour permettre la montée du verre dans le canal et d'alimenter ainsi le centrifugeur, il est nécessaire de mettre au moins la zone 20(b) du canal sous pression réduite modérée, par exemple sous 0,5 atmosphère. Une autre variante consiste à ce que le verre en fusion soit soutiré de la chambre de fusion en partie supérieure, par exemple à l'aide d'une gorge immergée comme cela est bien connu dans le domaine verrier.

La figure 3 se concentre sur la zone horizontale 20(c) du canal d'amenée du verre mousseux en fusion 20 soutiré de la chambre de fusion 2, qui alimente en verre le corps du centrifugeur 21. Celui-ci présente une partie supérieure 22 comprise entre la pièce 23 et la plaque métallique 24, et une partie inférieure 30 se situant sous la plaque métallique 24. La pièce 23 est creuse, c'est un cylindre muni de lumières permettant de réguler le débit, la perte de charge du verre entrant dans le centrifugeur 21. Le verre pénètre aussi dans la partie supérieure 22 où l'on établit un vide partiel de par exemple 0,1 bar ou atmosphère. Se pose la question de la jonction 25 entre la partie statique du canal 20 et la partie mise en rotation du corps 21.

Une première solution consiste à adopter un joint « dynamique ». Le verre mousseux sortant de la pièce creuse 23 va sous la force centrifuge tendre à « monter » dans la zone 26 et à sortir spontanément par l'espace laissé libre au niveau de la jonction 25 : c'est ainsi le verre lui-même, qui, éjecté en continu, assure l'étanchéité. On peut prévoir de limiter, réguler le débit du verre éjecté en modulant l'espace entre l'ensemble mobile 21 et l'ensemble fixe 20.

Une autre solution consiste à disposer dans la jonction 25 un joint dit tournant de composition adaptée. Il peut notamment s'agir d'un joint tournant à anneau liquide, utilisant un liquide à très faible tension de vapeur du type huile silicone et dont le principe de fonctionnement est le même que celui des pompes à vide à anneau liquide : l'anneau liquide est centrifugé par la rotation et se met sous pression s'opposant à la dépression existant au sein du centrifugeur.

Le verre s'écoule ensuite par les orifices de la plaque 24 dans la zone 23 munie d'un tuyau de mise à l'air 27. Cette plaque, tout au moins pour les parties complètement immergées dans le verre, peut avantageusement être en molybdène. Le garnissage extérieure des parois internes du corps du centrifugeur peut être constitué de pièces réfractaires électrofondues 32 comportant un isolant thermique 31 incorporé de façon à ce que celui-ci ne soit pas écrasé par la force centrifuge. Est également prévue une encoche, rainure 28 faisant le tour de la paroi interne de la partie 30 (ou discontinue), qui permet de piéger toutes les particules solides de densité supérieure à celle du verre, du type inclusions de réfractaires. En effet, l'écoulement de bas en haut du verre dans le centrifugeur se fait de la façon suivante : la plaque 24 décompose le centrifugeur en deux parties, autorise une centrifugation du verre en couche mince réduisant la hauteur de l'appareil par rapport à celle qui serait nécessaire sans celle-ci et sans l'application d'une pression réduite. Une des conditions pour que le verre circule correctement de bas en haut est que la pression du verre correspondant à la distance entre les sommets des deux paraboles soit supérieur à la somme des pertes de charge et de l'écart entre la pression réduite de la partie 22 et la pression ambiante de la partie 23, ce qui est réalisable. Le verre s'écoulant à travers la plaque 24 va donc se plaquer en couche mince contre les parois internes de la partie 30, les particules solides plus denses que le verre sont alors projetées contre les parois et piégées dans les rainures 28 d'où elles ne peuvent plus ressortir. Les bulles par contre croissent et viennent par action centripète éclater vers l'intérieur du corps du centrifugeur. En final, on soutire dans la partie la plus basse de la partie 30 le verre affiné par un canal dont la tête à une forme approximativement d'entonnoir 29. En condition standard de fonctionnement, il n'est pas nécessaire de prévoir des moyens de réchauffage du verre, la vitesse de rotation peut être de l'ordre de 700 tours par minute et la hauteur h du centrifugeur de par exemple 1 à 3 mètres.

La figure 4 représente de façon très simplifiée une variante possible de l'affineur selon les figures 2 et 3, concentrée sur la zone de jonction 40 entre le canal d'amenée 20c à pression atmosphérique et le corps du centrifugeur 21 sous pression réduite : on y voit un piston 41 apte à régler la perte de charge et le débit d'entrée du verre à affiner dans le centrifugeur 21. On a interposé dans l'orifice d'écoulement 42 du canal 20c vers le centrifugeur une grille 43 en molybdène percée régulièrement d'orifices de préférence cylindriques, qui joue le rôle d'une filière d'alimentation pour le centrifugeur et qui divise le jet de verre en entrée en une multiplicité de petits filets de verre, représentés très schématiquement sous la référence 44 et de diamètre d'environ 1 à quelques millimètres par exemple. Cette grille 43 fait ainsi fonction de diviseur de jet, les bulles contenues dans chaque filet 44 sont éliminées plus vite que si elles étaient contenues dans une veine de verre de section beaucoup plus large. La combinaison de ces petits filets 44 avec l'utilisation d'une pression réduite permet de faire éclater les bulles dans le verre de façon extrêmement rapide. Les filets 44 dont les bulles ont été éliminées se retrouvent en bas du centrifugeur 21 sous forme de gouttelettes qui coalescent sur ses parois internes du fait de la force centrifuge.

L'utilisation d'un tel diviseur de jet présente aussi un intérêt dans le cas où l'affinage est effectué dans un affineur statique comme celui représenté à la figure 1.

Dans un cas comme dans l'autre (affineur statique ou centrifuge), on voit qu'on peut compacter de manière spectaculaire la taille des dispositifs de fusion/affinage disponibles actuellement. A noter en outre qu'il est avantageux que le vide partiel, aussi bien dans le cas de l'affineur statique que de l'affineur centrifuge, soit un vide d'azote, facilitant l'éclatement des bulles et moins dommageable pour les pièces métalliques comme la pièce 24 de l'affineur centrifuge. On a aussi intérêt à ajouter aux matières vitrifiables des agents d'aide à l'affinage dont le rôle a été décrit plus haut, notamment du coke à faible granulométrie, du sulfate, du nitrate, du fluor ou du chlore.

A noter par ailleurs que le molybdène éventuellement utilisé en chambre de fusion et/ou en compartiment d'affinage peut être constitué par du platine.

On peut aussi appliquer ce mode de fusion pour recycler des produits composites verre/métal ou verre/plastique, comme mentionné plus haut, soit pour produire du verre utilisable, soit pour produire du calcin pour alimenter un four verrier traditionnel, (selon, notamment, la proportion de ces produits composite par rapport au reste des matières vitrifiables plus traditionnelles).

## Revendications

1. Procédé de fusion et d'affinage de matières vitrifiables, ***caractérisé en ce que*** tout ou partie de l'énergie thermique nécessaire à la fusion desdites matières vitrifiables est apportée par la combustion de combustible(s) avec au moins un gaz comburant, le(s)dit(s) combustible/gaz ou les produits gazeux issus de la combustion étant injectés sous le niveau de la masse des matières vitrifiables (7) *et en ce que* l'affinage des matières vitrifiables après fusion comprend au moins une étape de mise à une pression sous-atmosphérique.

2. Procédé selon la revendication 1, ***caractérisé en ce que*** le comburant est à base d'air, d'air enrichi en oxygène ou d'oxygène.

3. Procédé selon l'une des revendications précédentes, ***caractérisé en ce que*** le combustible est hydrocarboné, du type fioul ou gaz naturel, et/ou est à base d'hydrogène.

4. Procédé selon l'une des revendications précédentes, ***caractérisé en ce que*** les matières vitrifiables comprennent des matières premières et/ou du calcin et/ou des déchets vitrifiables et/ou des éléments combustibles, notamment des composites verre-plastique, des composites verre-métal, des matériaux organiques, du charbon.

5. Procédé selon l'une des revendications précédentes ***caractérisé en ce que*** la fusion des matières vitrifiables s'effectue dans au moins une chambre de fusion (2) que l'on équipe de brûleurs (5) traversant ses parois latérales et/ou traversant la sole (4) et/ou suspendus à partir de la voûte (3) ou de superstructures de façon à ce que leurs combustions (6) ou gaz de combustion se développent dans la masse des matières vitrifiables en cours de fusion (7).

6. Procédé selon l'une des revendications précédentes ***caractérisé en ce que*** les combustions (6) créées par la combustion de combustible fossile avec le(s) gaz comburant(s) et/ou les gaz issus de ladite combustion assurent par convection le brassage des matières vitrifiables (7).

7. Procédé selon la revendication 5 ou la revendication 6, ***caractérisé en ce qu'on*** règle la hauteur de la masse des matières vitrifiables (7) dans la chambre de fusion (2) et la hauteur sur laquelle se développent les combustions (6)/gaz issus de la combustion pour que lesdits combustibles/gaz de combustion restent dans la masse desdites matières vitrifiables.

8. Procédé selon l'une des revendications précédentes, ***caractérisé en ce que*** la fusion est précédée d'une étape de préchauffage des matières vitrifiables à au plus 900°C.

9. Procédé selon l'une des revendications précédentes, ***caractérisé en ce que*** l'affinage est opéré sur les matières vitrifiables en fusion du type verre à l'état mousseux, présentant notamment une masse volumique d'environ 0,5 à 2 g/cm³, notamment 1 à 2 g/cm³.

10. Procédé selon la revendication 9, ***caractérisé en ce que*** l'affinage est opéré sur des matières vitrifiables en fusion du type verre à l'état mousseux, présentant un taux de sulfate d'au plus 600 ppm en poids sous forme de SO₃, et/ou une majorité de bulles d'au moins 200 µm de diamètre

11. Procédé selon l'une des revendications précédentes, ***caractérisé en ce que*** les matières vitrifiables contiennent des additifs d'aide à l'affinage, notamment des additifs réducteurs du type coke, de préférence de granulométrie moyenne inférieure à 200 µm, des sulfates, ou des additifs à base de fluor ou de chlore du type halogénure, ou de nitrates du type NaNO₃.

12. Procédé selon l'une des revendications précédentes, ***caractérisé en ce qu'on*** introduit tout ou partie des matières vitrifiables dans la chambre de fusion (2) sous le niveau de la masse des matières vitrifiables en cours de fusion.

13. Procédé selon l'une des revendications précédentes, ***caractérisé en ce que*** l'affinage s'opère sous pression réduite dans une atmosphère d'air, d'air enrichi en gaz inerte du type azote, ou à base de gaz inerte du type azote..

14. Procédé selon l'une des revendications précédentes, ***caractérisé en ce que*** la pression sous-atmosphérique dans laquelle s'opère au moins une partie de l'affinage est inférieure ou égale à 0,5 atm., notamment de l'ordre de 0,3 atm. à 0,01 atm.

15. Procédé selon l'une des revendications précédentes, ***caractérisé en ce que*** la fusion et/ou l'affinage s'opèrent à au plus 1400°C, notamment au plus 1380 ou 1350°C.

16. Procédé selon l'une des revendications précédentes, ***caractérisé en ce que*** l'affinage est opéré dans au moins un compartiment statique (9) situé en aval de la chambre de fusion (2) et dont au moins une zone (14) est mise sous pression sous-atmosphérique.

17. Procédé selon l'une des revendications 1 à 15, ***caractérisé en ce que*** l'affinage est opéré dans au moins un compartiment (21) situé en aval de la chambre de fusion (2) et susceptible d'être mis en rotation pour assurer un affinage par centrifugation, avec au moins une zone (22) dudit compartiment, notamment la plus amont, mise sous pression sous-atmosphérique.

18. Dispositif de fusion et d'affinage de matières vitrifiables, notamment destiné à mettre en oeuvre le procédé selon l'une des revendications précédentes, ***caractérisé en ce qu'il*** comporte
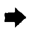 au moins une chambre de fusion (2) équipée de brûleurs (5) alimentés en combustible(s) et en comburant(s) du type air ou oxygène, lesdits brûleurs étant disposés de façon à injecter lesdits combustibles/gaz ou gaz issus de leur combustion sous le niveau de la masse (7) des matières vitrifiables introduites dans ladite chambre de fusion,
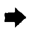 au moins un compartiment d'affinage (9, 21) en aval de la chambre de fusion (2) et comprenant au moins une zone à pression sous-atmosphérique.

19. Dispositif selon la revendication 18, ***caractérisé en ce que*** la chambre de fusion (2) est équipée d'au moins un moyen d'introduction de matières vitrifiables sous le niveau de la masse des matières vitrifiables en cours de fusion, notamment au moins deux, de préférence sous la forme d'ouverture(s) associé(s) à un moyen d'amenée du type vis sans fin.

20. Dispositif selon la revendication 18 ou la revendication 19, ***caractérisé en ce que*** les parois de la chambre de fusion (2), notamment celles destinées à être en contact avec la masse des matières vitrifiables en cours de fusion, sont à base de matériaux réfractaires associés à un système de refroidissement par fluide du type eau.

21. Dispositif selon l'une des revendications 18 à 20, ***caractérisé en ce que*** les parois de la chambre de fusion (2), notamment celles destinées à être en contact avec la masse des matières vitrifiables en cours de fusion, sont à base de matériaux réfractaires doublés d'un garnissage de métal du type molybdène.

22. Dispositif selon la revendication 21, ***caractérisé en ce que*** ledit garnissage est maintenu à distance des parois constituées par les matériaux réfractaires.

23. Dispositif selon la revendication 21 ou 22, ***caractérisé en ce que*** ledit garnissage constitue une surface de contact avec les matières en fusion qui est continue ou percée d'orifices.

24. Dispositif selon l'une des revendications 18 à 23, ***caractérisé en ce qu'au*** moins une partie des brûleurs (5) de la chambre de fusion (2) est conçu de façon à pouvoir aussi injecter dans la masse des matières vitrifiables un fluide ne participant pas à la combustion, en substitution au comburant et/ou au combustible, notamment un gaz inerte du type N₂ et/ou un fluide de refroidissement du type eau.

25. Dispositif selon l'une des revendications 18 à 24, ***caractérisé en ce que*** le compartiment d'affinage (9) est statique, en élévation ***et en ce qu'il*** comporte une cloison interne (13) sensiblement verticale délimitant avec les parois dudit compartiment au moins deux canaux, dont successivement un premier canal (14) imposant aux matières vitrifiables en fusion un trajet ascendant et un second canal (15) imposant auxdites matières vitrifiables en fusion un trajet descendant.

26. Dispositif selon la revendication 25, ***caractérisé en ce que*** le premier canal (14) est au moins en partie mis sous pression sous-atmosphérique.

27. Dispositif selon la revendication 25 ou 26, ***caractérisé en ce qu'il*** est équipé de moyen(s) de réglage/régulation de la perte de charge des matières vitrifiables en fusion à l'entrée du compartiment d'affinage (9, 21).

28. Dispositif selon l'une des revendications 18 à 24, ***caractérisé en ce que*** le compartiment d'affinage est statique en élévation et en ce qu'il comprend des moyens d'introduction des matières en fusion à affiner en partie supérieure et des moyens d'évacuation des matières affinées en partie inférieure, lesdites matières suivant globalement un trajet principalement vertical descendant dans ledit compartiment.

29. Dispositif selon l'une des revendications 18 à 24, ***caractérisé en ce que*** le compartiment d'affinage comporte au moins un appareil (21) susceptible d'être mis en rotation pour assurer l'affinage par centrifugation, les parois internes dudit appareil délimitant sensiblement la forme d'un cylindre creux, vertical dans sa partie médiane.

30. Dispositif selon la revendications 28, ***caractérisé en ce que*** ledit appareil comporte une zone supérieure (22) à pression sous-atmosphérique et une zone inférieure (30) à pression ambiante, séparées l'une de l'autre par un ou plusieurs moyens mécaniques du type plaque métallique percée d'orifice(s) (24).

31. Dispositif selon l'une des revendications 29 ou 30, ***caractérisé en ce que*** ledit appareil (21) est alimenté en partie supérieure en matières vitrifiables en fusion par un moyen d'amenée statique du type canal d'écoulement (20), avec des moyens d'étanchéité entre ledit moyen d'amenée statique (20) et ledit appareil (21) du type joint " dynamique " ou joint tournant.

32. Dispositif selon l'une des revendications 29 à 31, ***caractérisé en ce que*** l'appareil est muni de moyen(s) de piégeage de particules solides, notamment localisés dans sa zone inférieure (23) et sous forme d'encoches/de rainures (28) pratiquées dans ses parois internes.

33. Dispositif selon l'une des revendications 29 à 32 ***caractérisé en ce que*** la vitesse de rotation de l'appareil (21) est comprise entre 100 et 1500 tours/min.

34. Dispositif selon l'une des revendications 29 à 33 ***caractérisé en ce que*** l'appareil (21) est muni de moyens mécaniques fixes ou suivant sa rotation et aptes à cisailler la mousse et à l'entraîner vers la zone inférieure (23) de l'appareil, notamment sous forme de déflecteurs percés, d'ailettes disposés dans la zone supérieure (22) dudit appareil.

## Patentansprüche

1. Verfahren zum Schmelzen und Läutern von Glasrohstoffen, dadurch gekennzeichnet, daß die zum Schmelzen der Glasrohstoffe erforderliche Wärmeenergie ganz oder teilweise durch die Verbrennung von Brennstoff/en mit mindestens einem Brenngas bereitgestellt wird, wobei der/die Brennstoff/e/das/dieBrenngas/e oder die bei diesem Verbrennungsvorgang entstehenden gasförmigen Produkte unter das Niveau der Masse der Glasrohstoffe (7) eingeblasen werden, und daß die Läuterung der Glasrohstoffe nach dem Schmelzvorgang mindestens eine Stufe des unter Unter-Druck-Setzens umfaßt.

2. Verfahren nach Anspruch 1, dadurch gekennzeichnet, daß das Brenngas auf Basis von Luft, mit Sauerstoff angereicherter Luft oder Sauerstoff ist.

3. Verfahren nach einem der vorhergehenden Ansprüche, dadurch gekennzeichnet, daß der Brennstoff ein Kohlenwasserstoff vom Typ Öl oder natürliches Gas und/oder auf der Basis von Wasserstoff ist.

4. Verfahren nach einem der vorhergehenden Ansprüche, dadurch gekennzeichnet, daß die Glasrohstoffe Rohstoffe und/oder Glasbruch und/oder verglasbare Abfälle und/oder brennbare Bestandteile, insbesondere Glas-Kunststoff-Verbundmaterialien, Glas-Metall-Verbundmaterialien, organische Materialien und Kohle umfassen.

5. Verfahren nach einem der vorhergehenden Ansprüche, dadurch gekennzeichnet, daß das Schmelzen der Glasrohstoffe in mindestens einer Brennkammer (2) erfolgt, die mit Brennern (5) ausgerüstet ist, die durch ihre Seitenwände und/oder die Sohle (4) führen, und/oder an der Decke (3) oder an Überbauten derart aufgehängt sind, daß sich ihre Verbrennungsvorgänge (6) oder Brenngase in der Masse der Glasrohstoffe (7) während ihres Schmelzvorgangs verändern.

6. Verfahren nach einem der vorhergehenden Ansprüche, dadurch gekennzeichnet, daß die Verbrennungsvorgänge (6). die durch die Verbrennung des fossilen Brennstoffs mit dem/den Brenngas/en erzeugt werden, und/oder die Gase, die sich bei diesem Verbrennungsvorgang bilden, das Bubbling der Glasrohstoffe (7) durch Konvektion sicherstellen.

7. Verfahren nach Anspruch 5 oder 6, dadurch gekennzeichnet, daß die Höhe der Masse der Glasrohstoffe (7) in der Schmelzkammer (2) und die Höhe, bei welcher sich die Verbrennungsvorgänge (6)/Gase, die bei der Verbrennung entstehen, entwickeln, geregelt werden, damit die Brennstoffe/Brenngase in der Masse dieser Glasrohstoffe bleiben.

8. Verfahren nach einem der vorhergehenden Ansprüche, dadurch gekennzeichnet, daß dem Schmelzvorgang eine Stufe der Erhitzung der Glasrohstoffe auf höchstens 900°C vorhergeht.

9. Verfahren nach einem der vorhergehenden Ansprüche, dadurch gekennzeichnet, daß der Läuterungsvorgang mit geschmolzenen Glasrohstoffen vom Typ Glasschmelze im blasigen Zustand durchgeführt wird, die insbesondere eine Dichte von etwa 0, 5 bis 2 g/cm³, speziell 1 bis 2 g/cm³, aufweist.

10. Verfahren nach Anspruch 9, dadurch gekennzeichnet, daß der Läuterungsvorgang mit geschmolzenen Glasrohstoffen vom Typ Glasschmelze im blasigen Zustand durchgeführt wird, die einen Sulfatanteil von höchstens 600 Gewichts-ppm in Form von SO₃ und/oder eine Mehrheit von Bläschen mit mindestens 200 um Durchmesser aufweist.

11. Verfahren nach einem der vorhergehenden Ansprüche, dadurch gekennzeichnet, daß die Glasrohstoffe Läuterungshilfsmittel, insbesondere reduzierende Mittel vom Typ Koks, mit vorzugsweise einer mittleren Korngröße von unter 200 µm, Sulfate oder Hilfsmittel auf der Basis von Fluor oder Chlor vom Typ Halogenid oder Nitrate vom Typ NaNO₃ enthalten.

12. Verfahren nach einem der vorhergehenden Ansprüche, dadurch gekennzeichnet, daß die Glasrohstoffe ganz oder teilweise in die Schmelzkammer (2) unter dem Niveau der Masse der im Schmelzen begriffenen Glasrohstoffe eingebracht werden.

13. Verfahren nach einem der vorhergehend Ansprüche, dadurch gekennzeichnet, daß der Läuterungsvorgang unter Unterdruck in einer Atmosphäre aus Luft oder aus mit einem Inertgas vom Typ Stickstoff angereicherter Luft oder auf Basis eines Inertgases vom Typ Stickstoff durchgeführt wird.

14. Verfahren nach einem der vorhergehenden Ansprüche, dadurch gekennzeichnet, daß der Unterdruck, bei welchem mindestens ein Teil des Läuterungsvorgangs durchgeführt wird, weniger als oder gleich 0, 5 atm und insbesondere etwa 0, 3 bis 0, 01 atm beträgt.

15. Verfahren nach einem der vorhergehenden Ansprüche, dadurch gekennzeichnet, daß der Schmelzvorgang und/oder Läuterungsvorgang bei höchstens 1400°C und insbesondere bei höchstens 1380 oder 1350°C durchgeführt wird.

16. Verfahren nach einem der vorhergehenden Ansprüche, dadurch gekennzeichnet, daß der Läuterungsvorgang in mindestens einem statischen Abteil (9) durchgeführt wird, das sich nach der Schmelzkammer (2) befindet und wovon mindestens eine Zone (14) unter Unterdruck gesetzt worden ist.

17. Verfahren nach einem der Ansprüche 1 bis 15, dadurch gekennzeichnet, daß der Läuterungsvorgang in mindestens einem Abteil (21) durchgeführt wird, das sich nach der Schmelzkammer (2) befindet und in der Lage ist, gedreht zu werden, um eine Läuterung durch Zentrifugieren sicherzustellen, wobei mindestens eine Zone (22) dieses Abteils, insbesondere die hinterste, unter Unterdruck gesetzt wird.

18. Vorrichtung zum Schmelzen und Läutern von Glasrohstoffen, welche insbesondere für die Durchführung des Verfahrens nach einem der vorhergehenden Ansprüche vorgesehen und dadurch gekennzeichnet ist, daß sie umfaßt:
- mindestens eine Schmelzkammer (2), die mit Brennern (5) ausgerüstet ist, die mit Brennstoff/en und Brenngas/en des Typs Luft oder Sauerstoff versorgt werden, wobei die Brenner derart angeordnet sind, daß sie diese Brennstoffe/Brenngase oder die bei ihrer Verbrennung entstehenden Gase unter das Niveau der Masse der Glasrohstoffe (7) einblasen, die der Schmelzkammer zugeführt werden, und
- mindestens ein Läuterungsabteil (9, 21), das sich nach der Schmelzkammer (2) befindet und mindestens eine Unterdruckzone enthält.

19. Vorrichtung nach Anspruch 18, dadurch gekennzeichnet, daß die Schmelzkammer (2) mit mindestens einem Mittel für die Zufuhr von Glasrohstoffen unter das Niveau der Masse der Glasrohstoffe, die im Schmelzen begriffen sind, insbesondere mit mindestens zwei Mitteln, vorzugsweise in Form von einer oder mehreren Öffnungen, die mit einem Zufuhrmittel vom Typ Förderschnecke verbunden sind, ausgerüstet ist.

20. Vorrichtung nach Anspruch 18 oder 19, dadurch gekennzeichnet, daß die Wände der Schmelzkammer (2), insbesondere diejenigen, die vorgesehen sind, mit der Masse der Glasrohstoffe, die im Schmelzen begriffen sind, in Berührung zu kommen, auf der Grundlage feuerfester Materialien sind und mit einem System zur Kühlung durch ein Fluid vom Typ Wasser verbunden sind.

21. Vorrichtung nach einem der Ansprüche 18 bis 20, dadurch gekennzeichnet, daß die Wände der Schmelzkammer (2), insbesondere diejenigen, die vorgesehen sind, mit der Masse der Glasrohstoffe, die im Schmelzen begriffen sind, in Berührung gebracht werden, auf der Grundlage feuerfester Materialien, die durch eine Verkleidung aus einem Metall vom Typ Molybdän verstärkt werden, sind.

22. Vorrichtung nach Anspruch 21, dadurch gekennzeichnet, daß die Verkleidung in einem Abstand von den Wänden gehalten wird, die aus den feuerfesten Materialien bestehen.

23. Vorrichtung nach Anspruch 21 oder 22, dadurch gekennzeichnet, daß die Verkleidung aus einer Kontaktfläche für die schmelzenden Stoffe besteht, die ununterbrochen oder mit Öffnungen durchbohrt ist.

24. Vorrichtung nach einem der Ansprüche 18 bis 23, dadurch gekennzeichnet, daß mindestens ein Teil der Brenner (5) der Schmelzkammer (2) derart konstruiert ist, daß sie auch in die Masse der Glasrohstoffe ein Fluid, das nicht an der Verbrennung teilnimmt und das Brenngas und/oder den Brennstoff ersetzt, insbesondere eine Inertgas vom Typ N₂ und/oder ein Kühlfluid vom Typ Wasser, einleiten können.

25. Vorrichtung nach einem der Ansprüche 18 bis 24, dadurch gekennzeichnet, daß das Läuterungsabteil (9) in der Höhe statisch ist, und daß es eine im wesentlichen vertikale innere Trennwand (13), die mit den Wänden dieses Abteils mindestens zwei Kanäle bildet, umfaßt, wovon sukzessive ein erster Kanal (14) den schmelzenden Glasrohstoffen einen aufsteigenden Weg aufzwingt und ein zweiter Kanal (15) den schmelzenden Glasrohstoffen einen absteigenden Weg aufzwingt.

26. Vorrichtung nach Anspruch 25, dadurch gekennzeichnet, daß der erste Kanal (14) wenigstens teilweise unter Unterdruck gesetzt wird.

27. Vorrichtung nach Anspruch 25 oder 26, dadurch gekennzeichnet, daß sie mit einem oder mehreren Mitteln zur Regelung/Regulierung des Druckverlustes der schmelzenden Glasrohstoffe am Eingang des Läuterungsabteils (9, 21) ausgestattet worden ist.

28. Vorrichtung nach einem der Ansprüche 18 bis 24, dadurch gekennzeichnet, daß das Läuterungsabteil in der Höhe statisch ist, und daß es Mittel für die Zufuhr der zu läuternden geschmolzenen Stoffe im oberen Teil und Mittel für das Abziehen der geläuterten Stoffe im unteren Teil umfaßt, wobei diese Stoffe im großen und ganzen einem hauptsächlich vertikalen absteigenden Weg in diesem Abteil verfolgen.

29. Vorrichtung nach einem der Ansprüche 18 bis 24, dadurch gekennzeichnet, daß das Läuterungsabteil mindestens eine Einrichtung (21) enthält, die in der Lage ist, gedreht zu werden, um die Läuterung durch Zentrifugieren sicherzustellen, wobei die Innenwände dieser Einrichtung im wesentlichen die Form eines Hohlzylinders bilden, der in seinem mittleren Teil vertikal ist.

30. Vorrichtung nach Anspruch 28, dadurch gekennzeichnet, daß die Einrichtung eine obere Zone (22) mit Unterdruck und eine untere Zone (30) mit Umgebungsdruck umfaßt, die voneinander durch ein oder mehrere mechanische Mittel vom Typ einer mit Öffnung/en (24) durchbohrten Metallplatte getrennt sind.

31. Vorrichtung nach Anspruch 29 oder 30, dadurch gekennzeichnet, daß die Einrichtung (21) im oberen Teil mit geschmolzenen Glasrohstoffen durch ein statisches Zufuhrmittel vom Typ Fließkanal (20) versorgt wird, mit Dichtungsmitteln zwischen dem statischen Zufuhrmittel (20) und der Einrichtung (21) vom Typ "dynamische Dichtung" oder Drehverbindung.

32. Vorrichtung nach einem der Ansprüche 29 bis 31, dadurch gekennzeichnet, daß die Einrichtung mit einem oder mehreren Mitteln zur Entfernung von festen Teilchen versehen ist, die insbesondere in der unteren Zone (23) angeordnet sind und die Form von Vertiefungen/Rinnen (28) haben, die in ihren Innenwänden angebracht sind.

33. Vorrichtung nach einem der Ansprüche 29 bis 32, dadurch gekennzeichnet, daß die Umdrehungsgeschwindigkeit der Einrichtung (21) 100 bis 1500 U/min beträgt.

34. Vorrichtung nach einem der Ansprüche 29 bis 33, dadurch gekennzeichnet, daß die Einrichtung (21) mit mechanischen Mitteln versehen ist, die fest sind oder ihrer Drehung folgen und in der Lage sind, die Blasen zu vereinigen und in die untere Zone (23) der Einrichtung zu bringen, insbesondere in Form von durchbohrten Leiteinrichtungen und von Flügeln, die in der oberen Zone (22) dieser Einrichtung angeordnet sind.

## Claims

1. Process for melting and refining vitrifiable materials, characterized in that all or part of the thermal energy necessary for melting said vitrifiable materials is supplied by the combustion of fuel or fuels with at least one oxidant gas, said fuel or fuels/gas or the gaseous products resulting from the combustion being injected beneath the level of the mass of vitrifiable materials (7) and in that the refining of the vitrifiable materials after melting comprises at least one subatmospheric pressurization stage.

2. Process according to claim 1, characterized in that the oxidant gas is based on air, oxygen-enriched air or oxygen.

3. Process according to one of the preceding claims, characterized in that the fuel is hydrocarbonic of the fuel oil or natural gas type and/or is based on hydrogen.

4. Process according to one of the preceding claims, characterized in that the vitrifiable materials comprise raw materials and/or cullet and/or vitrifiable waste and/or fuel elements, particularly glass-plastic composites, glass-metal composites, organic materials and coal.

5. Process according to one of the preceding claims, characterized in that the melting of the vitrifiable materials takes place in at least one melting chamber (2) equipped with burners (5) traversing its side walls and/or traversing the floor (4) and/or suspended from the crown (3) or superstructures in such a way that their combustions (6) or combustion gases develop in the mass of vitrifiable materials (7) being melted.

6. Process according to one of the preceding claims, characterized in that the combustions (6) created by the combustion of fossil fuel with the oxidant gas or gases and/or the gases resulting from said combustion, by convection, ensure the stirring cf the vitrifiable materials (7).

7. Process according to claim 5 or 6, characterized in that the height of the mass of vitrifiable materials (7) in the melting chamber (2) and the height over which the combustions (6)/gases resulting from combustion develop are regulated in such a way that said fuels/combustion gases remain in the mass of said vitrifiable materials.

8. Process according to one of the preceding claims, characterized in that melting is preceded by a stage of preheating vitrifiable materials at at the most 900°C.

9. Process according to one of the preceding claims, characterized in that refining takes place on the molten vitrifiable materials of the glass type in the foamy state, having in particular a density of approximately 0.5 to 2 g/cm³, particularly 1 to 2 g/cm³.

10. Process according to claim 9, characterized in that refining takes place on molten vitrifiable materials of the glass type in the foamy state having a sulphate level of at the most 600 ppm by weight in the form of SO and/or a majority of bubbles with a diameter of at least 200 µm.

11. Process according to one of the preceding claims, characterized in that the vitrifiable materials contain refining-assisting additives, particularly reducing additives of the coke type, preferably with an average grain size below 200 µm, sulphates, or additives based on fluorine or chlorine of the halide type, or nitrates of the NaNO₃ type.

12. Process according to one of the preceding claims, characterized in that all or part of the vitrifiable materials are introduced into the melting chamber (2) beneath the level of the mass of vitrifiable materials being melted.

13. Process according to one of the preceding claims, characterized in that refining takes place under reduced pressure in an atmosphere of air, air enriched with inert gas of the nitrogen type, or based on inert gas of the nitrogen type.

14. Process according to one of the preceding claims, characterized in that the subatmospheric pressure under which at least part of the refining takes place is equal to or below 0.5 atm and in particular approximately 0.3 to 0.01 atm.

15. Process according to one of the preceding claims, characterized in that melting and/or refining take place at at the most 1400°C, particularly at at the most 1380 or 1350°.

16. Process according to one of the preceding claims, characterized in that refining takes place in at least one static compartment (9) positioned downstream of the melting chamber (2) and whereof at least one area (14) is placed under subatmospheric pressure.

17. Process according to one of the claims 1 to 15, characterized in that refining takes place in at least one compartment (21) located downstream of the melting chamber (2) and which can be rotated to ensure refining by centrifuging with at least one area (22) of said compartment, in particular the furthest upstream area, being placed under subatmospheric pressure.

18. Device for melting and refining vitrifiable materials and more particularly intended for implementing the process according to one of the preceding claims, characterized in that it comprises:
- at least one melting chamber (2) equipped with burners (15) supplied with fuel or fuels and oxidant or oxidants of the air or oxygen type, said burners being positioned so as to inject said fuels/gases or gases resulting from the combustion thereof beneath the level of the mass (7) of vitrifiable materials introduced into said melting chamber,
- at least one refining compartment (9, 21) downstream of the melting chamber (2) and having at least one area at subatmospheric pressure.

19. Device according to claim 18, characterized in that the melting chamber (2) is equipped with at least one means for introducing vitrifiable materials beneath the level of the mass of vitrifiable materials being melted, particularly at lease two of these, preferably in the form of openings associated with a feed means of the endless screw type.

20. Device according to claim 18 or 19, characterized in that the walls of the melting chamber (2), particularly those intended to come into contact with the mass of vitrifiable materials being melted, are based on refractory materials associated with a system of cooling by fluid of the water type.

21. Device according to one of the claims 18 to 20, characterized in that the walls of the melting chamber (2), particularly those intended to be in contact with the mass of vitrifiable materials being melted, are based on refractory materials duplicated by a metal lining of the molybdenum type.

22. Device according to claim 21, characterized in that said lining is kept at a distance from the walls constituted by refractory materials.

23. Device according to claim 21 or 22, characterized in that said lining constitutes a contact surface with the molten materials and which is continuous or perforated by orifices.

24. Device according to one of the claims 18 to 23, characterized in that at least part of the burners of the melting chamber (2) is designed so as to also be able to inject into the mass of vitrifiable materials a fluid not participating in the combustion process, being substituted for the oxidant gas and/or the fuel, particularly an inert gas of the N₂ type and/or a cooling fluid of the water type.

25. Device according to one of the claims 18 to 24, characterized in that the refining compartment (9) is static in elevation and in that it has a substantially vertical, internal partition (13) defining with the walls of said compartment at least two channels, namely successively a first channel (14) imposing a rising path on the molten vitrifiable materials and a second channel (15) imposing a falling path on the molten vitrifiable materials.

26. Device according to claim 25, characterized in that the first channel (14) is at least partly under subatmospheric pressure.

27. Device according to claim 25 or 26, characterized in that it is equipped with means for regulating/adjusting the pressure drop of the molten vitrifiable materials at the inlet of the refining compartment (9, 21).

28. Device according to one of the claims 18 to 24, characterized in that the refining compartment is static in elevation and in that it comprises means for introducing molten materials to be refined in the upper part and means for discharging refined materials in the lower part, said materials following a mainly vertically downward path in said compartment.

29. Device according to one of the claims 18 to 24, characterized in that the refining compartment has at least one apparatus (21) which can be rotated in order to ensure refining by centrifuging, the internal walls of said apparatus essentially defining the shape of a hollow cylinder, which is vertical in its median part.

30. Device according to claim 28, characterized in that said apparatus has an upper area (22) under subatmospheric pressure and a lower area (30) under ambient pressure, which are separated from one another by one or more mechanical means of the metal plate type perforated by orifices (24).

31. Device according to one of the claims 29 or 30, characterized in that said apparatus (21) is supplied in the upper part with molten vitrifiable materials with a static feed means (20) of the flow channel type, with sealing means between said static feed means (20) and said apparatus (21) of the "dynamic" joint or rotary joint type.

32. Device according to one of the claims 29 to 31, characterized in that the apparatus is equipped with solid particle trapping means, more particularly located in its lower area (23) and in the form of notches/slots (28) made in its inner walls.

33. Device according to one of the claims 29 to 32, characterized in that the rotation speed of the apparatus (21) is between 100 and 1500 revolutions/minute.

34. Device according to one of the claims 29 to 33, characterized in that the apparatus (21) is equipped with mechanical means which are fixed or follow its rotation and able to cut the foam and entrain it to the lower area (23) of the apparatus, more particularly in the form of deflectors penetrated by fins located in the upper area (22) of said apparatus.
